# EUROPÄISCHE PATENTSCHRIFT

(11) **EP 3 881 143 B1**
(45) Veröffentlichungstag und Bekanntmachung des Hinweises auf die Patenterteilung: **12.10.2022**
(21) Anmeldenummer: 19797695.4
(22) Anmeldetag: 31.10.2019
(51) Int. Cl.: G05B 19/042

(54) **VERFAHREN ZUR VERBESSERUNG DER MESSPERFORMANCE EINES ZU KONFIGURIERENDEN FELDGERÄTS DER AUTOMATISIERUNGSTECHNIK**
METHOD FOR IMPROVING THE MEASURING PERFORMANCE OF AN AUTOMATION FIELD DEVICE TO BE CONFIGURED
PROCÉDÉ PERMETTANT D'AMÉLIORER LA PERFORMANCE DE MESURE D'UN APPAREIL DE TERRAIN À CONFIGURER DANS LE DOMAINE TECHNIQUE DE L'AUTOMATISATION

(30) Priorität: 12.11.2018 DE 102018128254
(43) Veröffentlichungstag der Anmeldung: 22.09.2021
(73) Patentinhaber: Endress+Hauser SE+Co. KG, 79689 Maulburg (DE)
(72) Erfinder: GIRARDEY, Romuald, 68730 Blotzheim (FR)
(74) Vertreter: Koslowski, Christine Adelheid
(86) Internationale Anmeldenummer: PCT/EP2019/079869
(87) Internationale Veröffentlichungsnummer: WO 2020/099139

(56) Entgegenhaltungen:
- WO-A1-2015/075615
- WO-A1-2015/135559
- DE-A1-102007 039 531
- DE-A1-102016 010 048

## Beschreibung

Die Erfindung betrifft ein Verfahren zur Verbesserung der Messperformance eines zu konfigurierenden Feldgeräts, das in einer definierten Anwendung installiert ist und das zumindest eine physikalische oder chemische Prozessgröße eines Mediums in einer Automatisierungsanlage bestimmt oder überwacht.

In Automatisierungsanlagen, insbesondere in Prozess- und Fabrikautomatisierungsanlagen, werden vielfach Feldgeräte eingesetzt, die zur Erfassung und/oder Beeinflussung von Prozessvariablen dienen. Zur Erfassung von Prozessvariablen eines gasförmigen, flüssigen oder festen Mediums werden Sensoren verwendet, die beispielsweise in Füllstandsmessgeräte, Durchflussmessgeräte, Druck- und Temperaturmessgeräte, pH-Redoxpotentialmessgeräte, Leitfähigkeitsmessgeräte, Spektrometer, usw. integriert sind, welche die entsprechenden Prozessvariablen Füllstand, Durchfluss, Druck, Temperatur, pH-Wert, Leitfähigkeit, chemische Zusammensetzung des Mediums erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein Geräte verstanden, die in einer Automatisierungsanlage angeordnet sind. Eine Vielzahl solcher Feldgeräte wird von der Firma Endress + Hauser hergestellt und vertrieben.

Feldgeräte sind oftmals sehr komplex; entsprechend schwierig ist es, sie zu konfigurieren. Als Beispiel sei ein Radar-Füllstandsmessgerät genannt, das nach dem Laufzeitprinzip arbeitet. Dieses Gerät hat eine große Anzahl von Parametern, die entsprechend der jeweiligen Anwendung/Applikation eingestellt werden müssen. Darüber hinaus kann das Feldgerät in der Anwendung/in dem Prozess auch einer Vielzahl von Störgrößen ausgesetzt sein, die ebenfalls bei der Konfiguration bzw. Parametrierung berücksichtigt werden müssen. Eine Konfiguration oder die Behebung einer Störung eines Feldgeräts wird heute vom Servicetechniker vor Ort durchgeführt. Dieser versucht zuerst das Problem zu verstehen und anschließend eine korrekte Konfiguration für das Feldgerät zu finden. Damit die gefundene Lösung trägt, ist sowohl fundiertes Fachwissen bezüglich des Feldgeräts als auch Fachwissen hinsichtlich des Prozesses, in dem das Feldgerät installiert ist, erforderlich. Weiterhin muss der Servicetechniker auch alle in einer Applikation möglicherweise auftretenden Probleme sowie die Lösungsoptionen zur Behebung des jeweils aufgetretenen Problems kennen.

Das Dokument WO 2015/075615 A1 betrifft eine Lösung zum Austausch und Instandsetzung von Feldgeräten, bei der aus der Gerätebeschreibungsdatei des zu ersetzenden Feldgeräts unter Anwendung von Methoden der Machine Learning die Konfiguration eines neuen Feldgeräts erstellt wird.

Das Dokument WO 2015/135559 A1 offenbart eine Lösung zur Generierung der Konfiguration eines zu konfigurierenden Feldgeräts basierend auf Trainingsdaten aus mehreren Feldgeräten unter Anwendung eines lernfähigen Rechenprogramms.

Das Dokument DE 10 2016 010048 A1 offenbart eine Optimierung der Parameter eines Feldgeräts, nämlich eines Elektromotors, wobei maschinelles Lernen zum Erlernen eines Befehls und der entsprechenden Parameter für den optimalen Hochlauf entsprechend der Umgebungstemperatur verwendet wird.

Der Erfindung liegt die Aufgabe zugrunde, ein Feldgerät auf einfache Art und Weise so zu konfigurieren, dass es mit einer auf den Prozess abgestimmten - also optimalen - Messperformance arbeitet.

Die Aufgabe wird gelöst durch ein Verfahren zur Verbesserung der Messperformance eines zu konfigurierenden Feldgeräts, das in einer definierten Anwendung installiert ist und das zumindest eine physikalische oder chemische Prozessgröße in einer Automatisierungsanlage bestimmt oder überwacht, mit folgenden Verfahrensschritten:
eine Vielzahl von Feldgeräten, die unterschiedliche physikalische oder chemische Prozessgrößen in unterschiedlichen Anwendungen und unter unterschiedlichen, an den jeweiligen Messpositionen der Feldgeräte herrschenden Umgebungsbedingungen bestimmen oder überwachen, werden mittels eines Konfigurationstools konfiguriert bzw. parametriert, Konfigurationsdaten, Informationen über die jeweiligen Anwendungen und Informationen über die an den jeweiligen Messpositionen herrschenden Umgebungsbedingungen der einzelnen Feldgeräte werden in einem zentralen Datenspeicher als Trainingsdaten abgelegt;
die Trainingsdaten werden einem lernfähigen Rechenprogramm, das zumindest eine Methode des Machine Learning anwendet, zur Verfügung gestellt;
zwecks Konfiguration bzw. Parametrierung des zu konfigurierenden Feldgeräts werden dem lernfähigen Rechenprogram aktuelle Informationen über die jeweilige Anwendung und die an der Messposition des zu konfigurierenden Feldgeräts herrschenden Umgebungsbedingungen zur Verfügung gestellt,
aufgrund der aktuellen Informationen werden dem zu konfigurierenden Feldgerät, basierend auf der Vielzahl der Trainingsdaten, von dem lernfähigen Rechenprogramm Konfigurationsdaten bereitgestellt, die auf die jeweilige Anwendung unter Berücksichtigung der an der Messposition des zu konfigurierenden Feldgeräts herrschenden Umgebungsbedingungen abgestimmt sind.

Was unter Feldgeräten im Zusammenhang mit der Erfindung zu verstehen ist, wurde bereits in der Beschreibungseinleitung dargelegt. Auf eine Wiederholung wird verzichtet. Als Umgebungsinformationen werden insbesondere physikalische oder chemische Messgrößen herangezogen, die Einfluss auf das Feldgerät, insbesondere auf die Alterung des Feldgeräts haben. Die Umgebungsinformationen sind quantitativ und/oder qualitativ bestimmbar. Quantitativ bedeutet hierbei, dass die Größen von Messgeräten gemessen werden; qualitativ bedeutet, dass ihre Auswirkungen auf die Feldgeräte hinreichend genau bestimmt werden. Als Beispiel kann hier eine zeitweise betriebene Pumpe genannt werden, die während des Betriebs leichte, mittlere oder starke Vibrationen verursacht.

Mittels des erfindungsgemäßen Verfahrens ist es möglich, ein Feldgerät mit Konfigurationsdaten auszustatten, die optimal angepasst sind auf die jeweilige Anwendung, in der das Feldgerät installiert ist. Durch die kontinuierliche Verbesserung und Optimierung der Konfigurationsdaten einer Vielzahl von Feldgeräten (Big Data) ist es letztlich möglich, die optimale Konfiguration für ein Feldgerät in einer Anwendung zu finden, ohne dass seitens des Servicepersonals Spezialkenntnisse vorhanden sein müssen. Das lernfähige, auf KI basierende Rechenprogramm wird über eine Vielzahl von Konfigurationsdaten und Umgebungsinformationen von Feldgeräten eingelernt und übernimmt nachfolgend die Konfiguration selbstständig, oder aber es fungiert - zumindest in einer sog. Hilfephase als Konfigurationshilfe. Fehlen dem lernfähigen Rechenprogramm Informationen, so tritt es in Kontakt mit dem Servicepersonal oder einer geeigneten Datenbank und erfragt die fehlenden Informationen.

Gemäß einer Weiterbildung des erfindungsgemäßen Verfahrens werden die Kalibrierdaten und die Umgebungsinformationen in der Datenbank abgespeichert. Bevorzugt handelt es sich aufgrund der großen Anzahl der Daten, die mitunter weltweit an unterschiedlichen Positionen bestimmt und gesammelt werden, um eine cloudfähige Datenbank.

Im Zuge der Schlagworte "Industrial Internet of Things (IIoT)" und "Industrie 4.0" werden vermehrt Daten aus industriellen Anlagen auf sogenannten cloudfähigen Datenbanken gespeichert. Als cloudfähige Datenbank wird eine Datenbank verstanden, welche kompatibel zur Cloud-Computing-Technologie ist. Unter Cloud Computing wird in diesem Fall das Speichern von Informationen und das Zugreifen auf die gespeicherten Informationen über das Internet verstanden.

Zum Zugriff auf eine solche Datenbank und zum Austausch der Daten werden sogenannte Schnittstellen zur Anwendungsprogrammierung (engl.: "Application Programm Interface", kurz "API") verwendet. Diese definieren die erlaubten Befehle und Zugriffsarten auf eine Datenbank. Vor dem Zugriff kann die API eine Authentifikation des Benutzers verlangen. Diese Authentifikation wird üblicherweise über einen Schlüssel (einen sogenannten "API key") realisiert. Bevorzugt kommen diese Technologien in Verbindung mit dem erfindungsgemäßen Verfahren zum Einsatz.

Erfindungsgemäß arbeitet das lernfähige Rechenprogram bzw. das mathematische Modell mit den Methoden des Machine Learning. Insbesondere ist vorgesehen, dass das lernfähige Rechenprogramm zumindest ein neuronales Netz verwendet. Alternative Ausgestaltungen des erfindungsgemäßen Verfahrens nutzen die Nearest Neighbor Methode, Entscheidungsbäume und/oder eine Support Vector Machine. Weitere Varianten, die in Verbindung mit der erfindungsgemäßen Lösung einsetzbar sind, sind die Methoden der Linear oder Nonlinear Regression, Ensembles, Naive Bayes oder Logistic Regression. Diese und weitere geeignete Methoden aus dem Bereich der Künstlichen Intelligenz, die für das lernfähige Rechenprogramm eingesetzt werden, sind beispielsweise aus dem Fachbuch "Grundkurs Künstliche Intelligenz", 4. Auflage von Herrn Prof. Ertl bekannt geworden.

Bevorzugt erfolgen die Berechnungen in einer Cloudanwendung. Alternativ kann das lernfähige Rechenprogramm auch auf einem Bedientool installiert sein.

In Industrieanlagen erfolgt die Kommunikation zwischen zumindest einer übergeordneten Steuereinheit und den Feldgeräten in der Regel über ein Bussystem, wie beispielsweise Profibus^{®} PA, Foundation Fieldbus^{®} oder HART^{®}. Die Bussysteme können sowohl drahtgebunden als auch drahtlos ausgestaltet sein. Die übergeordnete Steuereinheit dient zur Prozesssteuerung, zur Prozessvisualisierung, zur Prozessüberwachung sowie zur Inbetriebnahme und Bedienung der Feldgeräte und wird auch als Konfigurier- /Managementsystem bezeichnet. Auch ist es bekannt geworden, Feldgeräte mit Internetschnittstellen zwecks Kommunikation und/oder Energieversorgung auszurüsten.

In zunehmendem Maße sind Feldgeräte der Automatisierungstechnik auch oder ausschließlich mit einer Nahfeldkommunikationsschnittstelle ausgestattet. Bevorzugt handelt es sich bei einer entsprechenden Nahfeldkommunikationsschnittstelle (NFC Schnittstelle) um eine standardisierte Schnittstelle, z.B. eine Bluetooth- bzw. eine Bluetooth Low Energy- (BLE) Schnittstelle, die eine Reichweite bis ca. 100 m haben. Unter Verwendung einer entsprechenden App sind die Feldgeräte dann mittels handelsüblicher Kommunikationstools (Smartphone, Tablet, Laptop, ...) bedienbar. Die zuvor genannten Kommunikationsmöglichkeiten der Feldgeräte sind selbstverständlich auch - einzeln oder in Kombination - in Verbindung mit der erfindungsgemäßen Lösung einsetzbar.

Eine vorteilhafte Weiterbildung des erfindungsgemäßen Verfahrens schlägt vor, dass die Konfigurationsdaten und die aktuellen Informationen über die jeweilige Anwendung und die an der Messposition des zu konfigurierenden Feldgeräts herrschenden Umgebungsbedingungen in der zentralen Datenbank gespeichert werden. Zur Übermittlung der Konfigurationsdaten wird im Zusammenhang mit der Erfindung zumindest eines der bekannten drahtlosen oder drahtgebundenen Kommunikationsverfahren verwendet.

Bevorzugt werden die Trainingsdaten für das lernfähige Rechenprogramm im Rahmen der Inbetriebnahme oder im Rahmen eines Wartungs- oder Serviceeinsatzes gewonnen.

Weiterhin ist folgendes vorgesehen: Für den Fall, dass an einem Feldgerät eine Fehlfunktion auftritt, die einen nachfolgenden Service- oder Wartungseinsatz des Servicepersonals erfordert, wird Information bezüglich der Fehlfunktion und Information zur Behebung der Fehlfunktion in dem zentralen Datenspeicher gespeichert.

Falls an einem der Feldgeräte eine Fehlfunktion auftritt, die einen nachfolgenden Service- oder Wartungseinsatz eines Servicetechnikers erfordert, wobei während dem nachfolgenden Service- oder Wartungseinsatz die ursprünglichen Konfigurationsdaten geändert werden, ist folgendes vorgesehen: Die ursprünglichen Konfigurationsdaten, gegebenenfalls auch die ursprünglichen Informationen über die jeweilige Anwendung und die an der Messposition des Feldgeräts herrschenden Umgebungsbedingungen, werden in dem zentralen Datenspeicher durch die geänderten Konfigurationsdaten und/oder geänderten Informationen über die jeweilige Anwendung und die an der Messposition des Feldgeräts herrschenden Umgebungsbedingungen ersetzt. Alternativ sind die abgespeicherten Daten mit Zeitstempel versehen.

Darüber hinaus wird vorgeschlagen, dass nach der Einlernphase des Rechenprogramms, das sich zumindest einer Methode des Machine Learning bedient, die Inbetriebnahme, Fehlerbehebung oder Wartung der Feldgeräte über ungeschultes Bedienpersonal oder automatisch erfolgt - dies ist die Phase der automatischen Konfiguration eines Feldgeräts.

Für den Fall, dass die jeweilige Anwendung und die an der Messposition des Feldgeräts herrschenden Umgebungsbedingungen bekannt sind, wird vorgeschlagen, dass das zu kalibrierende Feldgerät z.B. zum Zeitpunkt der Erstinstallation - mit Konfigurationsdaten voreingestellt ist, die bereits auf die jeweilige Anwendung unter Berücksichtigung der an der Messposition des zu konfigurierenden Feldgeräts herrschenden Umgebungsbedingungen abgestimmt sind.

Wird zu einem zukünftigen (späteren) Zeitpunkt eine Änderung an den Konfigurationsdaten eines Feldgeräts zwecks Verbesserung der Messperformance vorgenommen, so werden allen Feldgeräten über ungeschultes Personal oder automatisch entsprechende geänderte Konfigurationsdaten, die auf die jeweilige Anwendung unter Berücksichtigung der an der jeweiligen Messposition der Feldgeräte herrschenden Umgebungsbedingungen abgestimmt sind, bereitgestellt.

Bevorzugt erfolgt die Bereitstellung von Konfigurationsdaten oder von geänderten Konfigurationsdaten, die auf die jeweilige Anwendung unter Berücksichtigung der an der jeweiligen Messposition der Feldgeräte herrschenden Umgebungsbedingungen abgestimmt sind, über Internet oder Intranet. Die Kommunikation erfolgt im Wesentlichen zwischen dem intelligenten Feldgerät und dem lernfähigen Rechenprogramm. Beispielsweise ist das lernfähige Rechenprogramm dem Feldgerät selbst integriert. Es handelt sich jetzt um ein intelligentes Feldgerät.

Die Erfindung wird anhand der nachfolgenden Figuren näher erläutert. Es zeigt:

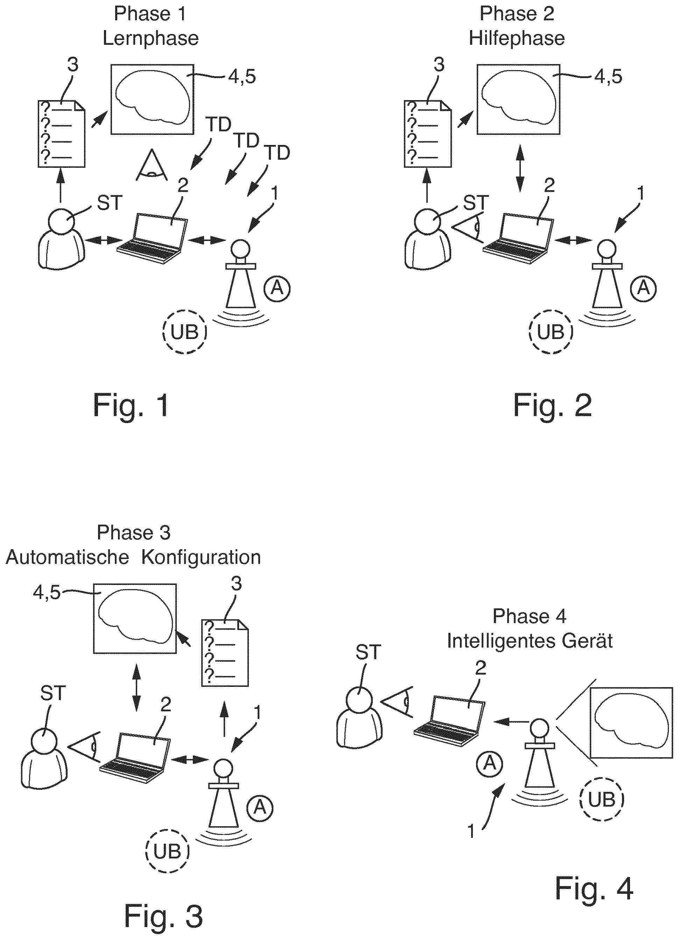

Fig. 1 zeigt eine schematische Darstellung der erfindungsgemäßen Phase 1 - der sog. Lernphase - zur Konfiguration eines Feldgeräts 1. Das erfindungsgemäße Verfahren dient der Verbesserung bzw. Optimierung der Messperformance des zu konfigurierenden Feldgeräts 1. Das Feldgerät 1 ist in einer definierten Anwendung installiert und bestimmt oder überwacht zumindest eine definierte physikalische oder chemische Prozessgröße eines Mediums, das z.B. in einem Behälter oder einer Rohrleitung befindlich ist. Allgemein wird im Rahmen der Erfindung davon gesprochen, dass sich das Feldgerät 1 in einer Automatisierungsanlage befindet.

Um die Phase 1 durchzuführen, sind die nachfolgend beschriebenen Verfahrensschritte vorgesehen: Eine Vielzahl von Feldgeräten 1n, die unterschiedliche physikalische oder chemische Prozessgrößen in unterschiedlichen Anwendungen An und unter unterschiedlichen, an den jeweiligen Messpositionen der Feldgeräte 1 herrschenden Umgebungsbedingungen UBn bestimmen oder überwachen, werden mittels eines Konfigurationstools 2 konfiguriert bzw. parametriert. In den Figuren ist aus Gründen der Übersichtlichkeit jeweils nur ein Feldgerät 1 in einer Applikation A gezeigt. Die entsprechenden Umgebungsbedingungen an der Messpositon von dem einen Feldgerät 1 sind mit UB gekennzeichnet. Erfindungsgemäß handelt es sich jedoch um eine Vielzahl von Feldgeräten 1n, die an Messposiitonen MPn unter unterschiedlichen Umgebungsbedingungen UBn in unterschiedlichen Applikationen An installiert sind.

Die Konfiguration wird üblicherweise von einem erfahrenen Servicetechniker ST durchgeführt, der sowohl Kenntnisse hat über das Feldgerät 1 als auch über den Prozess, in dem sich das Feldgerät 1 befindet. Die Konfigurationsdaten, die Informationen über die jeweiligen Anwendungen An und die Informationen über die an den jeweiligen Messpositionen herrschenden Umgebungsbedingungen UBn der einzelnen Feldgeräte 1 werden in einem zentralen Datenspeicher 4 als Trainingsdaten abgelegt. Die Trainingsdaten TD werden einem lernfähigen Rechenprogramm 5, das zumindest eine Methode der Künstlichen Intelligenz anwendet, zur Verfügung gestellt. Mit den Trainingsdaten TD wird das lernfähige Rechenprogramm 5 trainiert. Die Vielzahl der unterschiedlichen Feldgeräte 1, die in unterschiedlichen Applikationen An und unter unterschiedlichen Umgebungsbedingungen UBn installiert sind und entsprechend angepasste Kalibrierdaten haben, sind in Fig. 1 nicht dargestellt.

Zwecks Konfiguration bzw. Parametrierung des in Fig. 1 dargestellten und zu konfigurierenden Feldgeräts 1 werden dem lernfähigen Rechenprogram 5 aktuelle Informationen über dessen Anwendung A und die an der Messposition des zu konfigurierenden Feldgeräts 1 herrschenden Umgebungsbedingungen UB zur Verfügung gestellt. Aufgrund dieser aktuellen Informationen werden dem zu konfigurierenden Feldgerät 1, basierend auf der Vielzahl der Trainingsdaten TD, von dem lernfähigen Rechenprogramm 5 Konfigurationsdaten 3 bereitgestellt, die auf die jeweilige Anwendung A unter Berücksichtigung der an der Messposition des zu konfigurierenden Feldgeräts 1 herrschenden Umgebungsbedingungen UB abgestimmt sind. Es handelt sich also um Konfigurationsdaten 3, die mit hoher Wahrscheinlichkeit für das Feldgerät 1 passend sind und somit dessen Messperformance unter den gegebenen Bedingungen sicherstellen und/oder optimieren. Im Prinzip übernimmt das lernfähige Rechenprogramm am Ende der Phase 1 die Konfiguration bzw. Parametrierung des Feldgeräts 1.

Um sicher zu gehen, dass die Konfigurationsdaten okay sind, kann vorgesehen sein, dass der Nutzer die vom lernfähigen Rechenprogram vorgeschlagene Einstellung bestätigt. In Fig. 2 ist eine schematische Darstellung der Phase 2 - der sog. Hilfephase - zur Konfiguration des Feldgeräts 1 dargestellt. So kann auch vorgesehen sein, dass dem Nutzer/Servicetechniker ST Konfigurationsvorschläge gemacht werden, und der Nutzer eine Auswahlmöglichkeit hat. Weiterhin können Fragen von dem lernfähigen Programm an den Nutzer/Servicetechniker ST gestellt werden, um die Zuverlässigkeit der gelieferten Konfigurationsdaten zu verbessern. In dieser Phase ist das lernfähige auf KI basierende Rechenprogramm eine Konfigurationshilfe. Additiv oder alternativ kann das lernfähige Rechenprogramm auch auf eine Best Practice- und/oder Known Issue-Datenbank zugreifen, um alle Information zur Verfügung zu haben, die für die Bereitstellung der geeigneten Konfigurationsdaten erforderlich sind. Insbesondere kann das lernfähige Programm 5 auch gespeicherte Informationen über bekannte Fehlfunktionen und ihre geeignete Behebung abrufen.

Fig. 3 zeigt eine schematische Darstellung der Phase 3 - Automatische Konfiguration - eines Feldgeräts 1. In dieser Phase haben sich die Vorschläge des auf der KI basierenden Rechenprogramms zur Konfiguration der Feldgeräte 1 bereits als zuverlässig herausgestellt. Hier übernimmt das lernfähige Rechenprogramm 5 die Konfiguration. Das lernfähige Rechenprogramm 5 braucht nun keinen weiteren Input mehr von dem Servicetechniker ST oder von anderweitigen Informationsdatenbanken.

Fig. 4 zeigt eine schematische Darstellung der Phase 4. Bei dem Feldgerät 1 handelt es sich nun um ein intelligentes Feldgerät 1. Das lernfähige Rechenprogramm 5 ist beispielsweise permanent oder zeitweise in das Feldgerät 1 direkt integriert. Das Feldgerät 1 ist in der Lage, sich selbst zu konfigurieren. Der Servicetechniker ST ist für die Konfiguration des Feldgeräts 1 nicht mehr erforderlich.

## Patentansprüche

1. Verfahren zur Verbesserung der Messperformance eines zu konfigurierenden Feldgeräts (1), das in einer definierten Anwendung installiert ist und das zumindest eine definierte physikalische oder chemische Prozessgröße in einer Automatisierungsanlage bestimmt oder überwacht, mit folgenden Verfahrensschritten:
eine Vielzahl von Feldgeräten (1), die unterschiedliche physikalische oder chemische Prozessgrößen in unterschiedlichen Anwendungen (A) und unter unterschiedlichen, an den jeweiligen Messpositionen der Feldgeräte (1) herrschenden Umgebungsbedingungen (UB) bestimmen oder überwachen, werden mittels eines Konfigurationstools (2) konfiguriert bzw. parametriert, Konfigurationsdaten (3), Informationen über die jeweiligen Anwendungen (A) und Informationen über die an den jeweiligen Messpositionen herrschenden Umgebungsbedingungen (UB) der einzelnen Feldgeräte (1) werden in einem zentralen Datenspeicher (4) als Trainingsdaten (TD) abgelegt,
die Trainingsdaten (TD) werden einem lernfähigen Rechenprogramm (5), das zumindest eine Methode des Machine Learning anwendet, zur Verfügung gestellt, wobei das lernfähige Rechenprogramm (5) mit den Trainingsdaten (TD) trainiert wird,
zwecks Konfiguration bzw. Parametrierung des zu konfigurierenden Feldgeräts (1) werden dem lernfähigen Rechenprogram (5) aktuelle Informationen über die jeweilige Anwendung (A) und die an der Messposition des zu konfigurierenden Feldgeräts herrschenden Umgebungsbedingungen (UB) zur Verfügung gestellt,
aufgrund der aktuellen Informationen werden dem zu konfigurierenden Feldgerät (1), basierend auf der Vielzahl der Trainingsdaten, von dem lernfähigen Rechenprogramm (5) Konfigurationsdaten (3) bereitgestellt, die auf die jeweilige Anwendung (a) unter Berücksichtigung der an der Messposition des zu konfigurierenden Feldgeräts (1) herrschenden Umgebungsbedingungen (UB) abgestimmt sind.

2. Verfahren nach Anspruch 1,
die Konfigurationsdaten (3) und die aktuellen Informationen über die jeweilige Anwendung (A) und die an der Messposition des zu konfigurierenden Feldgeräts herrschenden Umgebungsbedingungen (UB) werden in der zentralen Datenbank (4) gespeichert.

3. Verfahren nach Anspruch 2,
die Trainingsdaten für das lernfähige Rechenprogramm (5) werden im Rahmen einer Inbetriebnahme oder im Rahmen eines Wartungs- oder Serviceeinsatzes gewonnen.

4. Verfahren nach Anspruch 1, 2 oder 3,
für den Fall, dass an einem Feldgerät (1) eine Fehlfunktion auftritt, die einen nachfolgenden Service- oder Wartungseinsatz eines Servicetechnikers (ST) erfordert, wird Information zu der Fehlfunktion und Information zu der Behebung der Fehlfunktion in dem zentralen Datenspeicher (4) gespeichert.

5. Verfahren nach einem oder mehreren der vorhergehenden Ansprüche,
für den Fall, dass an einem der Feldgeräte (1) eine Fehlfunktion auftritt, die einen nachfolgenden Service- oder Wartungseinsatz eines Servicetechnikers (ST) erfordert, wobei während dem nachfolgenden Service- oder Wartungseinsatz die ursprünglichen Konfigurationsdaten (3) geändert werden, werden die ursprünglichen Konfigurationsdaten (3), gegebenenfalls auch die ursprünglichen Informationen über die jeweilige Anwendung (A) und die an der Messposition des Feldgeräts herrschenden Umgebungsbedingungen (UB) in dem zentralen Datenspeicher (4) durch die geänderten Konfigurationsdaten (3') und/oder geänderten Informationen über die jeweilige Anwendung (A') und die an der Messposition des Feldgeräts herrschenden Umgebungsbedingungen (UB') ersetzt.

6. Verfahren nach Anspruch 1,
wobei nach der Einlernphase des Rechenprogramms (5), das sich zumindest einer Methode des Machine Learning bedient, eine Inbetriebnahme, eine Fehlerbehebung oder eine Wartung der Feldgeräte (1) über ungeschultes Bedienpersonal oder automatisch erfolgt.

7. Verfahren nach Anspruch 6,
wobei für den Fall, dass die jeweilige Anwendung (A) und die an der Messposition des Feldgeräts (1) herrschenden Umgebungsbedingungen (UB) bekannt sind, das zu kalibrierende Feldgerät (1) mit Konfigurationsdaten (3) voreingestellt ist, die auf die jeweilige Anwendung (A) unter Berücksichtigung der an der Messposition des zu konfigurierenden Feldgeräts (1) herrschenden Umgebungsbedingungen (UB) abgestimmt sind.

8. Verfahren nach Anspruch 1,
wobei für den Fall, dass zu einem zukünftigen Zeitpunkt eine Änderung an den Konfigurationsdaten (3) eines Feldgeräts zwecks Verbesserung der Messperformance vorgenommen wird, allen Feldgeräten (1) über ungeschultes Personal oder automatisch entsprechende geänderte Konfigurationsdaten (3'), die auf die jeweilige Anwendung (A) unter Berücksichtigung der an der jeweiligen Messposition der Feldgeräte herrschenden Umgebungsbedingungen (UB) abgestimmt sind, bereit gestellt werden.

9. Verfahren nach Anspruch 8,
wobei die Bereitstellung von Konfigurationsdaten (3) oder der geänderten Konfigurationsdaten (3), die auf die jeweilige Anwendung (A) unter Berücksichtigung der an der jeweiligen Messposition der Feldgeräte (1) herrschenden Umgebungsbedingungen (UB) abgestimmt sind, über Internet oder Intranet erfolgt.

## Claims

1. Procedure to improve the measuring performance of a field device (1) to be configured, which is installed in a defined application and which determines or monitors at least a defined physical or chemical process variable in an automation system, wherein said procedure comprises the following steps:
Several field devices (1), which determine or monitor different physical or chemical process variables in different applications (A) and under different environmental conditions (UB) present at individual measuring positions of the field devices (1), are configured or parameterized using a configuration tool (2), Configuration data (3), information about the respective applications (A) and information about the environmental conditions (UB) of the different field devices (1) present at the individual measuring positions are saved in a central data memory (4) as training data (TD),
The training data (TD) is provided to a computing program (5) that is capable of learning, wherein the program uses at least a machine learning method, wherein
the computing program (5) that is capable of learning is trained with the training data (TD),
For the purpose of configuring or parameterizing the field device (1) to be configured, current information about the respective application (A) and the environmental conditions (UB) present at the measuring position of the field device to be configured are provided to the computing program (5) that is capable of learning,
On the basis of the current information, the computing program (5) that is capable of learning provides the field device (1) to be configured with configuration data (3) based on the multiple training data items, which are adapted to the respective application (a) taking into account the environmental conditions (UB) present at the measuring position of the field device (1) to be configured.

2. Procedure as claimed in Claim 1, wherein the configuration data (3) and the current information regarding the application (A) and the environmental conditions (UB) present at the measuring position of the field device to be configured are saved in the central database (4).

3. Procedure as claimed in Claim 2, wherein the training data for the computing program (5) that is capable of learning is obtained in the course of commissioning or in the course of maintenance or servicing.

4. Procedure as claimed in Claim 1, 2 or 3, wherein,
in the event that a malfunction occurs at a field device (1), which requires subsequent servicing or maintenance by a service technician (ST), information about the malfunction and information about fixing the malfunction are saved in the central data memory (4).

5. Procedure as claimed in one or more of the previous claims, wherein,
in the event that a malfunction occurs at one of the field devices (1), which requires subsequent servicing or maintenance by a service technician (ST) - wherein the original configuration data (3) is modified during the subsequent servicing or maintenance - during the subsequent servicing or maintenance, the original configuration data (3), and - where applicable - the original information about the specific application (A) and the environmental conditions (UB) present at the measuring position of the field device are replaced in the central data memory (4) by the modified configuration data (3') and/or by the modified information about the application (A') and the environmental conditions (UB') present at the measuring position of the field device.

6. Procedure as claimed in Claim 1,
wherein, after the learning phase of the computing program (5), which uses at least one machine learning method, commissioning, troubleshooting or maintenance of the field devices (1) is performed by untrained operating staff or automatically.

7. Procedure as claimed in Claim 6,
wherein, in the event that the application (A) and the environmental conditions (UB) present at the measuring position of the field device (1) are known, the field device (1) to be calibrated is preset with configuration data (3) that are adapted to the application (A) taking into considering the environmental conditions (UB) present at the measuring position of the field device (1) to be configured.

8. Procedure as claimed in Claim 1,
wherein, in the event that a change is made to the configuration data (3) of a field device in the future for the purpose of improving the measuring performance, corresponding, modified configuration data (3'), that is adapted to the respective application (A) taking into account the environmental conditions (UB) present at the measuring position of the field devices, is made available to all the field devices (1) via untrained staff or automatically.

9. Procedure as claimed in Claim 8,
wherein the provision of configuration data (3) or modified configuration data (3) - which is adapted to the application (A) taking into account the environmental conditions (UB) present at the respective measuring position of the field devices (1) - is performed via Internet or intranet.

## Revendications

1. Procédé destiné à l'amélioration de la performance de mesure d'un appareil de terrain (1) à configurer, lequel appareil est installé dans une application définie et détermine ou surveille au moins une grandeur de process physique ou chimique définie dans une installation d'automatisation, lequel procédé comprend les étapes suivantes :
Une pluralité d'appareils de terrain (1), qui déterminent ou surveillent différentes grandeurs de process physiques ou chimiques dans différentes applications (A) et dans différentes conditions ambiantes (UB) régnant aux positions de mesure respectives des appareils de terrain (1), sont configurés ou paramétrés au moyen d'un outil de configuration (2),
Les données de configuration (3), des informations sur les applications respectives (A) et des informations sur les conditions ambiantes (UB) des différents appareils de terrain (1) régnant aux positions de mesure respectives sont stockées dans une mémoire de données centrale (4) en tant que données de formation (TD),
Les données de formation (TD) sont mises à la disposition d'un programme de calcul (5) évolutif, lequel programme utilise au moins une méthode de Machine Learning, le programme de calcul (5) évolutif étant adapté sur la base des données de formation (TD),
À des fins de configuration ou de paramétrage, des informations actuelles sur l'application respective (A) et les conditions ambiantes (UB) régnant à la position de mesure de l'appareil de terrain à configurer sont mises à la disposition du programme de calcul (5) évolutif,
Sur la base des informations actuelles, le programme de calcul (5) évolutif fournit à l'appareil de terrain (1) à configurer, en se basant sur la pluralité des données de formation, des données de configuration (3) qui sont adaptées à l'application (a) respective en tenant compte des conditions ambiantes (UB) régnant à la position de mesure de l'appareil de terrain (1) à configurer.

2. Procédé selon la revendication 1, pour lequel les données de configuration (3) et les informations actuelles concernant l'application respective (A) et les conditions ambiantes (UB) régnant à la position de mesure de l'appareil de terrain à configurer sont enregistrées dans la base de données centrale (4).

3. Procédé selon la revendication 2, pour lequel les données d'apprentissage pour le programme de calcul (5) capable d'apprendre sont obtenues dans le cadre d'une mise en service ou dans le cadre d'une intervention de maintenance ou de service.

4. Procédé selon la revendication 1, 2 ou 3, pour lequel,
dans le cas où un dysfonctionnement se produit sur un appareil de terrain (1), lequel dysfonctionnement nécessite une intervention de service ou de maintenance ultérieure d'un technicien de service (ST), des informations sur le dysfonctionnement et des informations sur la suppression du dysfonctionnement sont enregistrées dans la mémoire de données centrale (4).

5. Procédé selon l'une des revendications précédentes, pour lequel,
dans le cas où un dysfonctionnement se produit sur l'un des appareils de terrain (1), lequel dysfonctionnement nécessite une intervention de service ou de maintenance ultérieure d'un technicien de service (ST), les données de configuration initiales (3) étant modifiées pendant l'intervention de service ou de maintenance ultérieure, les données de configuration initiales (3), le cas échéant, les informations initiales concernant l'application (A) concernée et les conditions ambiantes (UB) régnant à la position de mesure de l'appareil de terrain sont remplacées dans la mémoire centrale de données (4) par les données de configuration (3') modifiées et/ou les informations modifiées concernant l'application (A') concernée et les conditions ambiantes (UB') régnant à la position de mesure de l'appareil de terrain.

6. Procédé selon la revendication 1,
pour lequel, après la phase d'apprentissage du programme de calcul (5), qui utilise au moins une méthode d'apprentissage automatique, une mise en service, une suppression des défauts ou une maintenance des appareils de terrain (1) est effectuée par un opérateur non formé ou de manière automatique.

7. Procédé selon la revendication 6,
pour lequel, dans le cas où l'application (A) concernée et les conditions ambiantes (UB) régnant à la position de mesure de l'appareil de terrain (1) sont connues, l'appareil de terrain (1) à calibrer est préréglé avec des données de configuration (3) qui sont adaptées à l'application (A) concernée en tenant compte des conditions ambiantes (UB) régnant à la position de mesure de l'appareil de terrain (1) à configurer.

8. Procédé selon la revendication 1,
pour lequel, dans le cas où l'on procède ultérieurement à une modification des données de configuration (3) d'un appareil de terrain en vue d'améliorer la performance de mesure, des données de configuration modifiées correspondantes (3'), qui sont adaptées à l'application respective (A) en tenant compte des conditions ambiantes (UB) régnant à la position de mesure respective des appareils de terrain, sont mises à la disposition de tous les appareils de terrain (1) par l'intermédiaire d'un personnel non formé ou de manière automatique.

9. Procédé selon la revendication 8,
pour lequel la mise à disposition de données de configuration (3) ou des données de configuration modifiées (3) - qui sont adaptées à l'application respective (A) en tenant compte des conditions ambiantes (UB) régnant à la position de mesure respective des appareils de terrain (1) - s'effectue via Internet ou Intranet.
